# EUROPEAN PATENT SPECIFICATION

(11) **EP 0 414 298 B1**
(45) Date of publication and mention of the grant of the patent: **01.06.1994**
(21) Application number: 90202112.0
(22) Date of filing: 02.08.1990
(51) Int. Cl.: B29D 31/00, B29C 67/14

(54) **Method for manufacturing an O-ring**
Verfahren zur Herstellung von O-Dichtungen
Procédé pour la fabrication de joints toriques

(30) Priority: 23.08.1989 NL 8902132
(43) Date of publication of application: 27.02.1991
(73) Proprietor: HOVAP INTERNATIONAL B.V., NL-8606 JV Sneek (NL)
(72) Inventor: Stelwagen, Jan, NL-8601 ZL Sneek (NL); Van Oosten, Henk, NL-8401 VP Gorredijk (NL)
(74) Representative: 't Jong, Bastiaan Jacobus

(56) References cited:
- EP-A- 0 140 432
- BE-A- 492 238
- DE-A- 1 600 552
- DE-A- 3 041 316
- DE-A- 3 100 837
- DE-A- 3 637 123

## Description

The invention relates to a method for manufacturing an O-ring as specified in the preamble of claim 1.

O-rings are very generally used sealing elements. They can be used for a great variety of applications. With the sealing of axially movable elements, particularly when this must take place in conditions wherein high temperatures occur, it may happen that an O-ring no longer functions satisfactory because it can be pressed out of its seat. It is known (DE-A 1 600 552) for such applications to use O-rings with a reinforcement of a stiff core, embedded therein, which have a greater stiffness. The sealing function of these known O-rings is not reliable in severe conditions.

The invention now has for its object to provide a method wherewith O-rings can be manufactured which also continue functioning reliably under difficult conditions. This is achieved with a method of the type described in the preamble by applying according to the invention the steps stated in the characteristic of claim 1.

An O-ring is hereby finally obtained which has a core of the reinforcing material in the cross section where originally the bottom of the notch was situated. This core makes the O-ring virtually non-stretch in lengthwise direction. The ring remains compressible in the normal manner so that the sealing properties remain preserved. Because the O-ring according to the invention is only non-stretch in lengthwise direction, but flexible in all other directions, it can settle very well in the O-ring groove and perform its sealing function, based on the pressure difference on both sides of the ring.

A number of preferred embodiments of the invention are stated in the sub-claims.

The invention will be further elucidated hereinafter with reference to the annexed figures.

Fig. 1 elucidates schematically a first phase in the method according to the invention.

Fig. 2 shows the section along II-II in fig. 1.

Fig. 3 and 4 show respectively two subsequent phases in the method according to the invention.

Fig. 5 shows a cross section along V-V in fig. 4.

Fig. 6 shows a final phase in the method according to the invention.

Fig. 7 is a perspective view of an O-ring obtained with the method according to the invention.

Fig. 8 is a section along VIII-VIII in fig. 7.

Fig. 9 is a lengthwise section of a valve wherein O-rings manufactured with the method according to the invention can be applied with advantage.

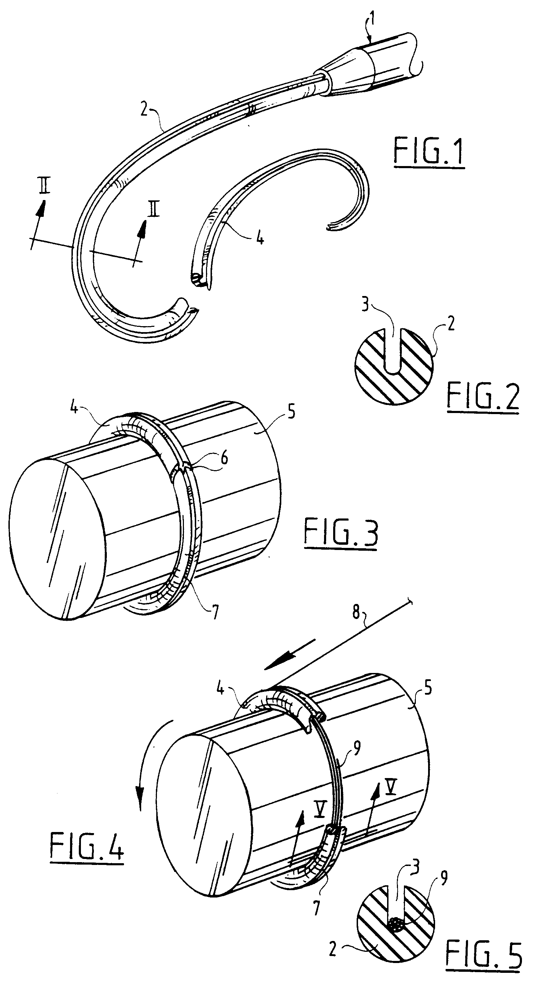

As shown in fig. 1 a strand 2 of unvulcanized elastomer material is manufactured in per se known manner using an extruder 1 whereof only the extrusion head is shown. The extrusion opening of the nozzle of the extruder 1 is embodied such that the cross section of the strand 2 has a notch 3, as shown in fig. 2.

For manufacture of an O-ring a piece 4 of determined length is cut off the strand 2. This piece 4 is placed round a mandrel 5. The piece 4 is cut from the strand 2 at a length such that the ends 6 thereof can be laid round the mandrel 5 precisely abutting one another. In this manner as shown in fig. 3 the lengthwise notch 3 forms an annular channel 7.

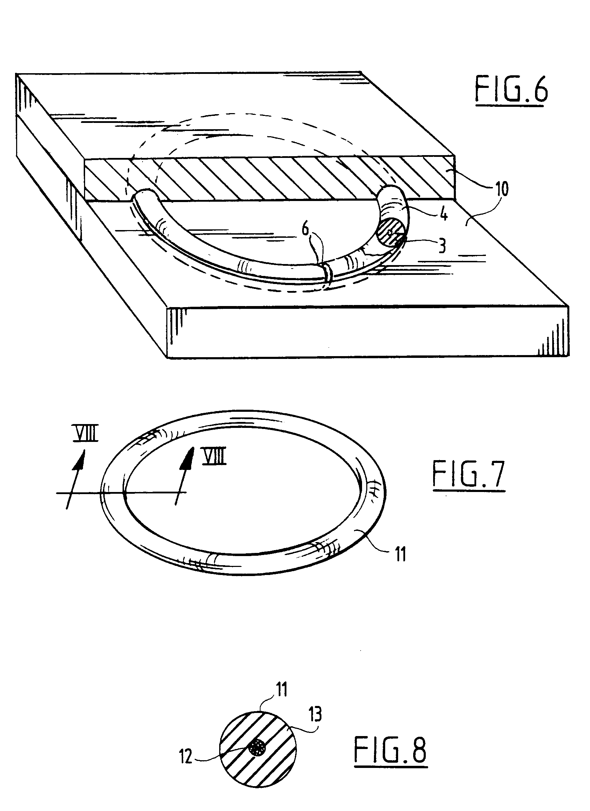

In this annular channel are now arranged a number of windings of a filament-like reinforcing material 8. This filament-like reinforcing material is preferably a synthetic fibre and more particularly an aramid fibre. The number of windings forms a bundle 9 on the bottom of the notch 3, as shown in fig. 5. The piece 4 of strand material thus curved into a ring and having wound therein the bundle of reinforcing material is arranged in a mould 10. The mould 10 has a mould cavity dimensioned such that the piece 4 of strand material is compressed, wherein the notch 3 is closed. This is depicted in fig. 6.

The mould 10 is a vulcanizing mould and the elastomer material of the strand piece 4 is vulcanized in this mould. The abutting faces of the groove 3 and the end faces 6 are therein joined together in normal manner so that a closed O-ring 11 is obtained as shown in fig. 7. The O-ring 11 obtained comprises a reinforcing core 12 and a body 13 of vulcanized elastomer material. The core 12 is virtually non-stretch so that even in the case of great loads and high temperatures the O-ring will not stretch. In addition the body 13 keeps the properties essential for a good sealing function.

It is remarked that the above described figures show purely schematically device components that are used for application of the method. These device components can be embodied in many different ways self-evident to a person skilled in the art. The extruding of a strand of base material and the eventual vulcanizing to a closed ring is already applied in normal O-ring manufacture. The winding of the reinforcing filament material in the annular channel can in principle be carried out manually but can of course also be mechanized.

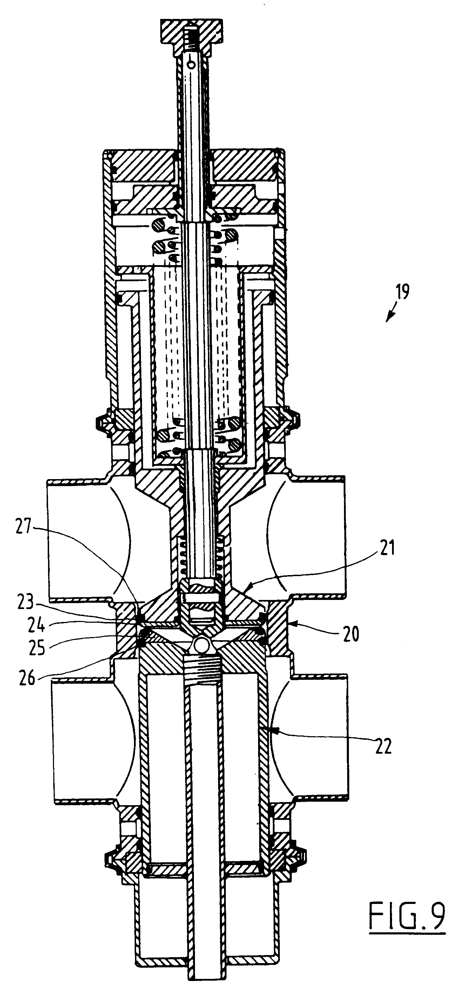

The valve shown in fig. 9 is a modification of an embodiment of a valve described in the European patent application 0 140 432 of applicant. Only the components relevant in respect of the present application will therefore be further described here.

The valve 19 comprises a housing 20 wherein a valve body assembled from an upper valve body 21 and a lower valve body 22 can slide between a closed position shown in the figure and a downward moved opened position. The valve bodies 21, 22 can also be moved relative to one another over a limited distance in order to enable cleaning of the valve with cleaning liquid.

The upper valve body 21 closes using an O-ring 23 in the cylinder-shaped valve seat 27. In similar manner the lower valve body 22 closes relative to this cylindrical valve seat 27 using an O-ring 26. In this embodiment the O-rings 23 and 26 are manufactured with the method according to the invention. Because they cannot be stretched in their lengthwise direction they cannot be arranged in the usual way in radial grooves. Instead the O-rings slide in axial direction into a relevant groove and are enclosed therein using a plate. The O-ring 23 is enclosed with a plate 24 screwed to the valve body 21, while the O-ring 26 is enclosed using a plate 25.

The valve shown in fig. 9 with O-rings manufactured according to the invention can function at high temperatures and high pressures without the danger of the sealing O-rings being pressed out of their seat grooves.

The O-rings manufactured according to the invention are of course not restricted to use in a valve such as the valve 19 of fig. 9. As is the case for conventional O-rings, the O-rings manufactured with the method according to the invention also have countless possible applications.

## Claims

1. Method for manufacturing an O-ring comprising manufacturing a strand of unvulcanized elastomer material with a notch in lengthwise direction, separating a piece of determined length from the strand, combining the piece with an annular reinforcement received in the channel and placing it into an annular mould cavity of a vulcanizing mould, compressing the strand piece provided with the reinforcement in the mould, wherein the notch is substantially pressed closed, and vulcanizing thereof to a closed O-ring, **characterized by** positioning the piece with the ends abutting and the notch directed outwardly so that an outwardly directed annular channel is formed by the notch, and arranging a number of windings of a filament-like reinforcing material in said annular channel.

2. Method as claimed in claim 1, **characterized in that** the strand piece is placed round a mandrel for winding therein of the reinforcing material.

3. Method as claimed in claim 1 or 2, **characterized in that** a synthetic fibre is taken for the filament-like reinforcing material.

4. Method as claimed in claim 3, **characterized in that** the synthetic fibre is an aramid fibre.

## Patentansprüche

1. Verfahren zur Herstellung eines O-Ringes mit Herstellen einer Litze aus unvulkanisiertem Elastomermaterial mit einer Kerbe in Längsrichtung, Abtrennen eines Stückes vorbestimmter Länge von der Litze, Kombinieren des Stückes mit einer ringförmigen Verstärkung, die in dem Kanal aufgenommen wird, und Setzen desselben in einen ringförmigen Formhohlraum einer Vulkanisierungsform, Komprimieren des mit der Verstärkung versehenen Litzenstückes, wodurch die Kerbe im wesentlichen geschlossen gepreßt wird, und Vulkanisieren desselben in einen geschlossenen O-Ring,
gekennzeichnet durch Positionieren des Stückes mit den Enden gegeneinander anstossend, wobei die Kerbe so nach außen zeigt, daß ein nach außen gerichteter ringförmiger Kanal von der Kerbe gebildet wird, und Anordnen einer Zahl von Windungen eines filamentartigen Verstärkungsmateriales in dem ringförmigen Kanal.

2. Verfahren nach Anspruch 1, dadurch gekennzeichnet, daß das Litzenstück um einen Dorn gelegt wird zum Dahineinwinden des Verstärkungsmateriales.

3. Verfahren nach Anspruch 1 oder 2, dadurch gekennzeichnet, daß eine synthetische Faser für das filamentartige Verstärkungsmaterial genommen wird.

4. Verfahren nach Anspruch 3, dadurch gekennzeichnet, daß die synthetische Faser eine Aramidfaser ist.

## Revendications

1. Procédé de fabrication d'un joint torique comportant la fabrication d'un cordon de matériau élastomère non vulcanisé ayant une encoche de direction longitudinale, la séparation d'une partie constituée d'une longueur déterminée de cordon, la combinaison de la partie avec un élément de renforcement annulaire logé dans le canal et la mise en place de celle-ci dans une cavité de moulage annulaire d'un moule de vulcanisation, la compression de la partie de cordon munie de l'élément de renforcement dans le moule, dans lequel l'encoche est à peu près fermée, et la vulcanisation de celle-ci pour obtenir un joint torique fermé, caractérisé en ce qu'on positionne la partie du cordon avec ses extrémités en butée et l'encoche dirigée vers l'extérieur de manière à ce qu'un canal annulaire dirigé vers l'extérieur soit formé par l'encoche, et on agence plusieurs enroulements de matériau de renforcement analogue à un filament dans ledit canal annulaire.

2. Procédé selon la revendication 1, caractérisé en ce que la partie du cordon est placée autour d'un mandrin pour enrouler dans celle-ci le matériau de renforcement.

3. Procédé selon la revendication 1 ou 2, caractérisé en ce qu'une fibre synthétique est utilisée en tant que matériau de renforcement analogue à un filament.

4. Procédé selon la revendication 3, caractérisé en ce que la fibre synthétique est une fibre aramide.
